Europäisches Patentamt

**European Patent Office**

Office européen des brevets

(11) Publication number: **0 012 604**
A1

# EUROPEAN PATENT APPLICATION

(21) Application number: **79302877.0**

(22) Date of filing: **12.12.79**

(51) Int. Cl.³: **B 62 K 15/00**

(30) Priority: **14.12.78 GB 4860078**

(43) Date of publication of application: **25.06.80**
**Bulletin 80/13**

(84) Designated Contracting States. **AT BE CH DE FR IT NL SE**

(71) Applicant: **Szumowski, Juan Jorge, Flat C15 Sloane Avenue Mansions Sloane Avenue, London. S.W.3. (GB)**

(72) Inventor: **Szumowski, Juan Jorge, Flat C15 Sloane Avenue Mansions Sloane Avenue, London. S.W.3. (GB)**

(74) Representative: **Ayers, Martyn Lewis Stanley et al, J.A. KEMP & CO. 14 South Square Gray's Inn, London, WC1R 5EU (GB)**

(54) **Folding bicycle.**

(57) A folding bicycle has a front wheel pivotally mounted to a connecting member (22) which is itself pivotable relative to a frame member (13). The frame member (13) is in turn pivotable relative to the rear wheel assembly (17) about the axis (15) of the pedals. The front wheel is rotatable through 180° relative to the rear of the bicycle: this may be achieved by having the front wheel (2) pivot 90° relative to the connecting member (22) and then having the connecting member (22) pivot 90° relative to the frame member (13) so that the front wheel is now facing rearwardly in a plane offset relative to the rear wheel. Pivoting of the frame member (13) and front wheel about the axis of the pedals brings the two wheels into overlying relation with one another providing a particularly compact form for storage and carrying. The saddle (18) is supported by two supporting strips (19) which depend to either side of the rear wheel assembly so that the saddle can be lowered. Variants of the above described bicycle are also disclosed.

- 1 -

DESCRIPTION

"FOLDING BICYCLE"

The present invention relates to a folding bicycle.

A number of forms of bicycle are known which may be folded up to a certain degree such that their volume when packed is small enough and their weight light enough to be carried by a person, or to be placed easily within a vehicle, for example, a train or the back of a car. Such a bicycle is especially useful for a person travelling to or from work, who may go a major part of the distance by train, and wish to go the small distance between station and office and/or station and home on a bicycle to save time. Thus it is desirable that the bicycle is both easy and quick to unfold and to fold, and that it takes up a minimum of room. Known folding bicycles have joints with nut and bolt arrangements which must be unscrewed before the bicycle can be folded up, this operation being time consuming, especially when a number of these joints are used to ensure that the bicycle will pack into a small volume. Furthermore, the more joints that there are on a bicycle then the weaker the overall construction. Thus prior forms of bicycles have had to sacrifice economy in volume when packed, for a sturdier form of construction or vice versa.

An alternative way of making such a bicycle compact when folded is to have smaller wheels, and diameters of between 0.3 and a third of a metre are common. However most people find that much more effort is required to ride such bicycles than those having a diameter of two thirds of a metre.

- 2 -

According to the present invention, there is provided a folding bicycle having front and rear wheels and a frame, the front wheel being pivotable through 180° during folding of the bicycle, and the bicycle being foldable about an intermediate axis extending transversely with respect to the frame so that the front and rear wheels lie side-by-side.

Preferably the frame comprises a frame member and a rear assembly which are pivoted relative to one another about said intermediate axis.

In this way, the bicycle is folded only about two sections of the frame, so that the strength of the structure is not greatly decreased, but the bicycle is compact when folded.

Preferably, the frame member and also if provided as a separate item, a support for the saddle are arcuate and arranged to be concentric with and closely spaced from the periphery of a wheel, when the bicycle is in a folded condition. Advantageously in one embodiment the frame member subtends an arc of a circle between 90° and 180°, and preferably about 120°.

In one embodiment pivoting of the handlebars and front wheel from the straight ahead position is limited to 90°, at least in one direction. On folding up, when this pivoting movement is made, the connecting member is then pivoted 90° relative to the frame member with the result that the front wheel is in a plane which is offset from that occupied by the rear wheel. A retaining member is provided between the frame member and the connecting member, such that the connecting member may be retained in one of only two positions relative to the frame member.

In this way the front wheel may be rotated initially through 90° by means of the pivotal connection between the wheel support axle and the connecting member and subsequently through a further 90° by means of the pivotal connection between the connecting member and the frame member. This operation therefore results in the wheels lying side-by-side in the folded position.

Thereafter, the frame member and front wheel may be further rotated about the rear end of the frame member, such that the front wheel is made to lie adjacent the rear wheel, the frame member preferably being adjacent the periphery of the two wheels when in this folded condition.

In other embodiments, the arrangement may be such that relative pivoting of the frame member and rear assembly causes the front wheel to be shifted out of the longitudinal median plane of the bicycle, which both it and the rear wheel occupy in the riding position, so that it can be disposed in side-by-side (i.e. face-to-face) relation with the rear wheel.

Each wheel may have a mudguard associated therewith, the internal width of each mudguard being greater than twice the width of a wheel, each wheel being mounted in its associated mudguard displaced from the symmetry plane within that mudguard such that upon folding, both wheels are within both mudguards.

Moreover, at least a part of the handlebars may also be of an arcuate form, and are preferably in the form of an arc of a circle subtending an angle preferably 120° and having a radius of curvature similar to that of the frame member and the wheels. The handlebars can then be pivotable, about mutually inclined axes, so as to be movable from an operational position to a position in which they too come together and closely surround the front wheel. The handlebars may be equipped with gear means so that they move together, and locking means to

- 4 -

retain them in a given position.

The pivoting axis of the frame member with the rear assembly is preferably aligned with the pedal spindle which is preferably on the rear assembly.

There may be means adjacent the pedal spindle to secure the rear end of the frame member in its operative position, to ensure that the frame member does not start folding up if the bicycle frame is lifted.

Much of the bicycle can be of a plastics material so as to achieve economy of weight and a smart appearance.

Preferably the saddle of the bicycle is provided on the rear wheel assembly such that its height may be adjusted by means of positioning strips which may slidably engage with the rear wheel assembly.

The drive means for the rear wheel may take one of a number of forms, for example a chain and gear system as conventionally used, or a direct drive rod linkage system.

Brakes on the rear wheel may be operable from the handlebars or alternatively they may be of the retro-action type, whereby pedalling backwards operates them. Front wheel brakes are preferably of the conventional type.

In order that the invention may more readily be understood, a description is given by way of example only, reference being made to the accompanying drawings, in which:-

Figure 1 is a side view of one embodiment of bicycle according to the present invention shown in the condition for use and also, in dotted lines, in a part-folded condition;

Figure 2 is a side view of the connecting member at the front end of the frame member;

Figure 3 is a section on the line 3-3 in Figure 2;

Figure 4 is a side view of the bicycle in the folded condition;

Figure 5 is a side view of the front wheel bearing of a bicycle of Figure 1;

Figure 6 is a view in section of the arrangement of wheels and mudguards of the bicycle when folded;

Figure 7 is a schematic plan view of the pedals, both in the operative and the folded positions;

Figure 8 is a somewhat schematic view of a further embodiment;

Figure 9 shows part of the embodiment of Figure 8 in the folded position; and

Figures 10A and 10B show the rear wheel assembly and frame member of the Figure 8 embodiment, in the unfolded and folded conditions respectively and in vertical section.

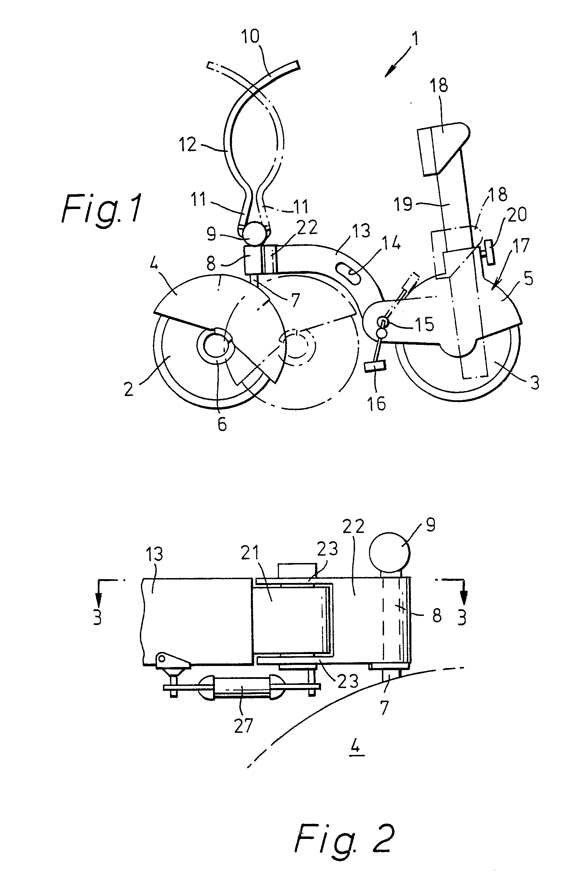

Figure 1 illustrates a side view of one embodiment of a bicycle 1 according to the present invention in two situations, that is the full lines show the bicycle 1 ready for riding and the broken lines show sections of the bicycle in a partly folded condition. The bicycle 1 has a front wheel 2 and back wheel 3 of the same radius, and which have mudguards 4 and 5 respectively, the disposition of each wheel relative to its corresponding mudguard being described below; the front wheel 2 has brakes operable from handlebars 10 and a wheel support which is connected by a stem 8 to a handlebar mounting 9 and handlebars 10. The front wheel 2 is mounted rotatably in bearing 6 which is described in greater detail later. Each handlebar has a short straight section 11, from which extends a larger segment 12 in the form of an arc subtending an angle of approximately 120$^{\circ}$ and having a radius of curvature equivalent to that of the wheels 2 and

- 6 -

3, such that in a folded condition the handlebars 10 may closely surround a part of a periphery of one of the wheels 2 or 3. The handlebars 9 are mounted about inclined axes and have interengaging toothed gear discs such that they move simultaneously and towards each other from the position shown in dotted lines to surround the front wheel. There is also a locking device (not shown) on the handlebar mounting 9 to secure the handlebars 10 in any given position.

The stem 8 is pivoted in a connecting member 22, pivoted to a frame member 13 which is in turn pivotally connected at a crank shaft axle 15 in a rear wheel assembly 17. The frame member 7 is in the form of an arc of a circle, having a radius of curvature equivalent to that of wheels 2 and 3, the arc subtending an angle of approximately 120$^{o}$; there is an aperture 14 of generally oval cross-section in the frame member 13, this aperture 14 enabling the bicycle to be grasped by a person for carrying the bicycle when folded. The rear end of frame member 13, while pivoting about axle 15, moves in a deep groove in the rear wheel assembly 17, such that when frame member 15 is in its operative position its upper edge rests against a lateral surface of said groove and is firmly retained there. Means are provided to further grip it in that position, to ensure the bicycle does not fold up when lifted in the operative position. A lever may be provided on the rear wheel assembly to disengage this gripping means, which preferably include a friction disc axially movable to and from a position in which it engages a fixed surface.

The rear wheel 3 may employ any form of braking system, for example a conventional hand brake which is operable from the handlebars 10, or a retro-action brake system wherein the brakes are applied on pedalling backwards for part of a revolution. A saddle 18 is located on top of the rear wheel assembly 17 and is adjustably supported thereon by means of two positioning strips 19, preferably of metal, which may be secured in any given position by means of locking screw 20. Pedals 16 are provided on extensions of the crank shaft 15, and their disposition will be described in greater detail later. The rear wheel 3 may be driven from the crank shaft 15 by any means, for example a chain and gear system as used conventionally in bicycles, or a direct drive rod linkage system with bevel gears at each end.

When the bicycle is in the partly folded condition, as indicated by broken lines in Figure 1, the front wheel 2 is rotated 180° about a vertical axis passing between wheel support axle 8 and frame member 13, such that it lies parallel to frame member 13 with its periphery abutting the lower edge of the frame member 13, the arrangement being compact due to their curvature being the same. The handlebars 10 are shown in an upright position after rotation through this 180° angle. Furthermore, the saddle 18 may be lowered to a position adjacent the top of the rear wheel assembly 17 with the two positioning strips 19 lying on either side of the rear wheel 3. Pedals 16 are placed on the rear wheel assembly 17 after unlocking them from their operative position as described later.

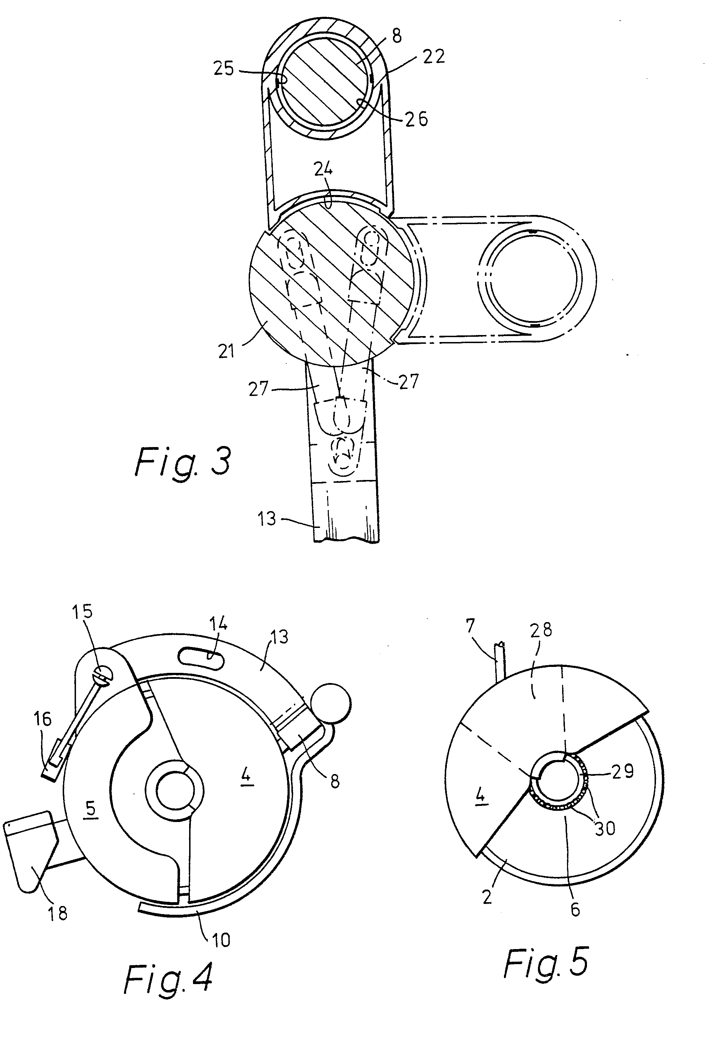

Figure 2 shows a side view of the double pivot connection between the front wheel 2 and the frame member 13, while Figure 3 is a plan view partly in section of the same assembly in the direction of the arrows 3-3 in Figure 2. It may be seen from these two Figures that the frame member 13 has an extension 21 on its forward end, the member 21 being in the form of a cylindrical tube with open ends, attached along a part of its outer side, and being oriented such that when the bicycle is in an upright position, a longitudinal axis of this extension 21 is in a substantially vertical direction. The connecting member 22 is pivoted to the frame extension 21, and has a cross-section in the form of two parallel straight lines of equal length, being joined at adjacent ends by arcuate lines, one being concave and the other convex. The connecting member 22 further has protrusions 23 extending parallel to the upper and lower surfaces of the central element 22 from the concave lateral edge, each of these protrusions 23 having a substantially circular aperture 24, through which pivot pin 23 passes to provide pivoting action with extension 21, which is fitted between the protrusions 23. Further, the connecting member 22, at its end remote from the protrusions 24, has an aperture running parallel to the convex lateral edge to accommodate the stem 8 so that it may rotate with respect to the member 22. The member 22 has at least two locking stops 25 on the periphery of aperture 26 to ensure that the front wheel 2 may not be rotated through an angle greater than $180^{\circ}$ with respect to the connecting member 22.

On the underside of the frame element 13 there is provided a retaining member 27, which may be any form of sprung tensioning device, and which is also attached to the underside of the connecting member 15; this retaining member 27 ensures that the connecting member 22 has only two stable positions relative to the frame member 13, i.e. where the longitudinal axis of the connecting member 22 is aligned with that of frame member 13 (shown in continuous lines in Figure 3) and that where the longitudinal axis of the connecting member 22 is perpendicular to that of the frame member 13 (shown in broken lines in Figure 3).

Figure 4 shows the bicycle 1 fully folded, and ready for carrying by a person, the front and rear wheels 2 and 3 are within opposing mudguards 5 and 4 respectively, and are largely hidden from view. Frame member 13 abuts a portion of the periphery of mudguards 4 and 5, and the aperture 14 which forms a handle is readily accessible. Handlebars 10 also abut a portion of the periphery of the mudguards 4 and 5, and saddle 18 is in its lowered position as shown in broken lines in Figure 1. The positioning strips 19 lie on either side of rear wheel 3, and are hidden from view by front mudguard 4. The pedals 16 have been released from their operative position, and are positioned on the rear mudguard 5, as shown in broken lines in Figure 1. It can be seen from Figure 4 that when packaged the bicycle 1 is most compact, this being partly due to the frame member 13 and handlebars 10 having the same curvature as the wheels 2 and 3, and therefore producing great efficiency in use of volume when packed.

Figure 5 shows the arrangement of bearing 6 for mounting and supporting the front wheel 2. Wheel support 7 is rigidly secured to wheel mounting 28, from which extends the mudguard 4 covering a portion of front wheel 2. The wheel mounting 28 is in the form of a section of toroid; the inner end 6 is the only part which is normally visible, and to this is fixed a spindle ring 29, the outer surface of which is in rotatable connection with the wheel 2 by means of, for example, a layer 30 of ball-bearings disposed in between the outer surface of spindle ring 29 and the inner surface of front wheel 2.

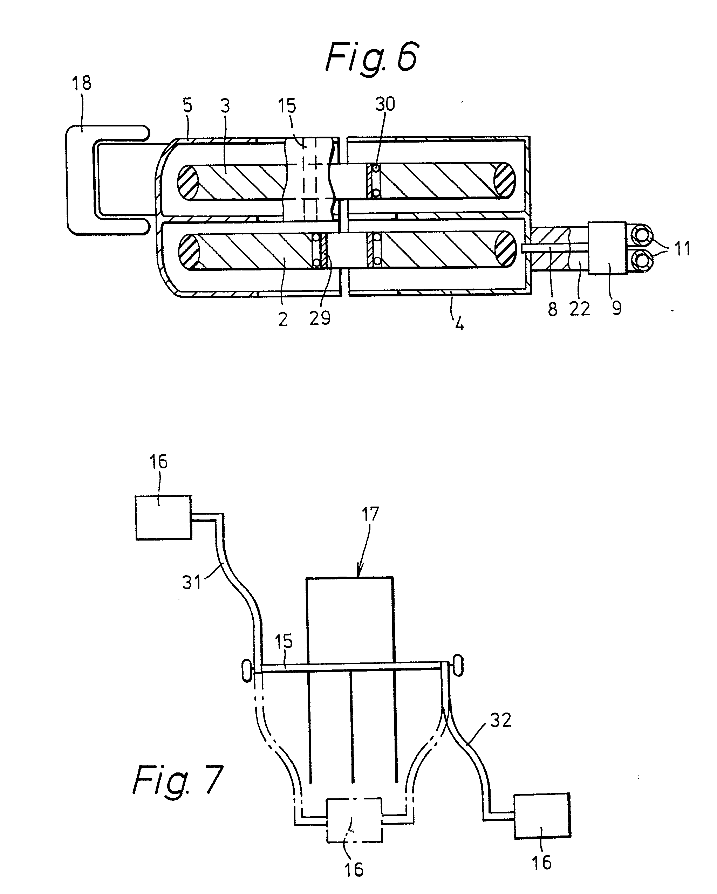

Figure 6 is a simplified cross-sectional view of the bicycle 1 when in a folded condition ready for carrying. From this figure it can be seen that each of

- 10 -

the mudguards 4 and 5 have an internal width greater than twice the width of either wheel 2 or 3, and furthermore each has two sections, one in which its corresponding wheel is rigidly mounted for rotation, the other into which the opposing wheel may engage so that the bicycle is compact when fully and correctly folded. It should be noted that the two wheels are displaced from one another by a distance dependent on the particular dimensions of the central element 22 as may be seen from Figure 3.

Figure 7 is a schematic representation of the pedals 16 showing their connection to the driving means of the bicycle 1. The crankshaft 15 is as explained before mounted within the rear wheel assembly 17 of the bicycle 1, and from each end of the crankshaft 15 there extends an arcuate connector arm 31 or 32, on the extreme end of which a pedal 16 is mounted. Locking means are provided at both ends of the crankshaft 15 from which connector arms 31 and 32 extend, so that the pedals may be secured for use. When folding up the bicycle, the connector arm 31 is rotated through an angle of $180^{\circ}$ in a plane comprising the crankshaft 15 and connector arm 31, while the other pedal is rotated through an angle of $180^{\circ}$ about the axis passing through the corresponding end of crankshaft 15 and parallel to connector arm 32. In this way the pedals may be made to rest on the rear wheel assembly 17 as shown in Figures 1 and 4; the connector arms 31 and 32 are shaped such that they will conform to the configuration of the rear wheel assembly 17 when the pedals are folded up. The positions of the two pedals 16 when folded are shown in Figure 7 in broken lines.

The pedals may be releasably locked in position by any suitable means. For example locking handles may be mounted on the shaft 15 adjacent the members 31 and

- 11 -

32 and have cam-like heels engaging with the members 31 and 32 to lock them to the shaft 15 when the levers are moved to the operating position.

The operation for folding up and packing the bicycle 1 will now be described. From a position in which the front wheel 2 is aligned with the frame member 13 and rear wheel 3, handlebars 10 are rotated in a clockwise direction as seen from above, to an angle of 90°, at which point locking stops 25 prevent the wheel support axle 8 from rotating any further with respect to connecting member 22. Further, torque in this direction therefore moves the connecting member 22 and wheel support axle 8 as one unit out of the stable position shown in continuous lines in Figure 3 and towards the other stable position, this being achieved with aid from the retaining member 26. Thus the unit itself has rotated through 90°, at which point it will be halted by stops provided on the frame extension 21. The front wheel 2 has now been rotated through 180°, and is positioned parallel to and displaced from the longitudinal axis of the bicycle including the frame member 13 and rear wheel 3. Locking screw 20 is released so that the positioning strips 19 are now movable and the saddle is positioned on top of rear wheel assembly 17. A lever positioned on the rear wheel assembly 17 adjacent the crankshaft 15 is now depressed and releases the frame member 13 so that it may now rotate relative to the crankshaft axis 15, until interlocking occurs between a wheel and its opposing mudguard, i.e. between front wheel 2 and rear mudguard 5, and between rear wheel 3 and front mudguard 5 as shown in Figure 6. Locking members on crankshaft 15 are released, so that the pedals 16 may be placed on top of rear wheel 17 in the manner described before. The handlebars 10 are loosened and are rotated

- 12 -

until they abut a periphery of the wheels 2 and 3. The bicycle is now fully folded. The operation should only take a minute at most and can be completed most easily. To unfold the bicycle 1 from its packed condition, the procedure just described is followed in reverse, once again being a very simple operation.

Preferably most of the components of the bicycle are made of moulded plastics, with the main load-bearing elements, for example, the double-pivot 22, 23, the front wheel mounting 7, 8, the front wheel spindle ring 29, the wheel mounting bracket 28, the positioning strips 19, and the connector arms 31, 32, being formed of e.g. aluminium or a light-weight steel, to ensure that the bicycle is light-weight and yet retains maximum strength.

A bicycle as generally described above is capable of being packed into a small volume for carrying and makes most efficient use of that volume when folded, while retaining a structure in use that is strong. Further, this compactness is not achieved by cutting down on the size of the wheels, and therefore making it a harder bicycle to ride; it should be noted that the size of the folded bicycle is largely determined by the size of the wheels, as can be readily seen from Figure 4.

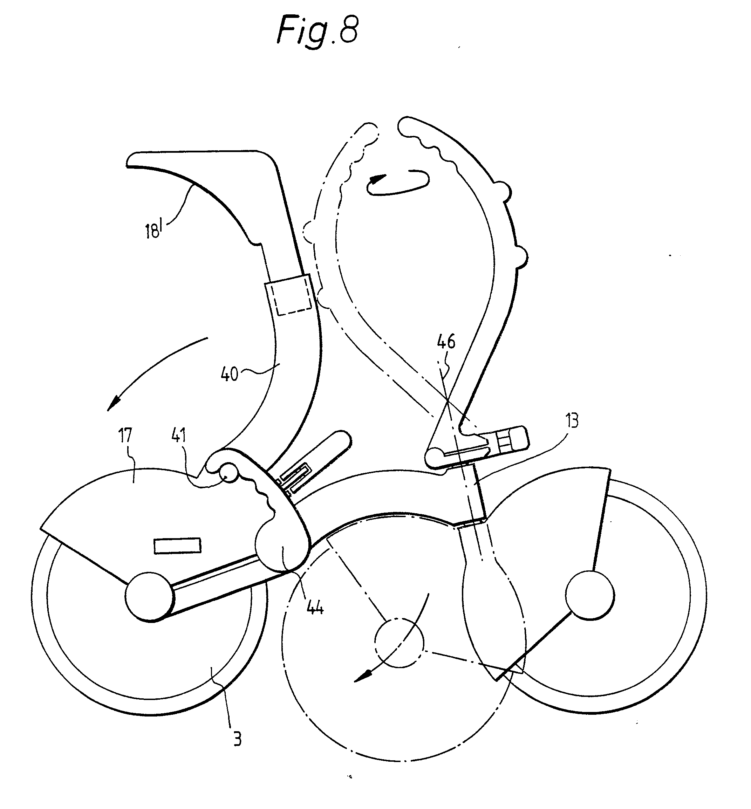

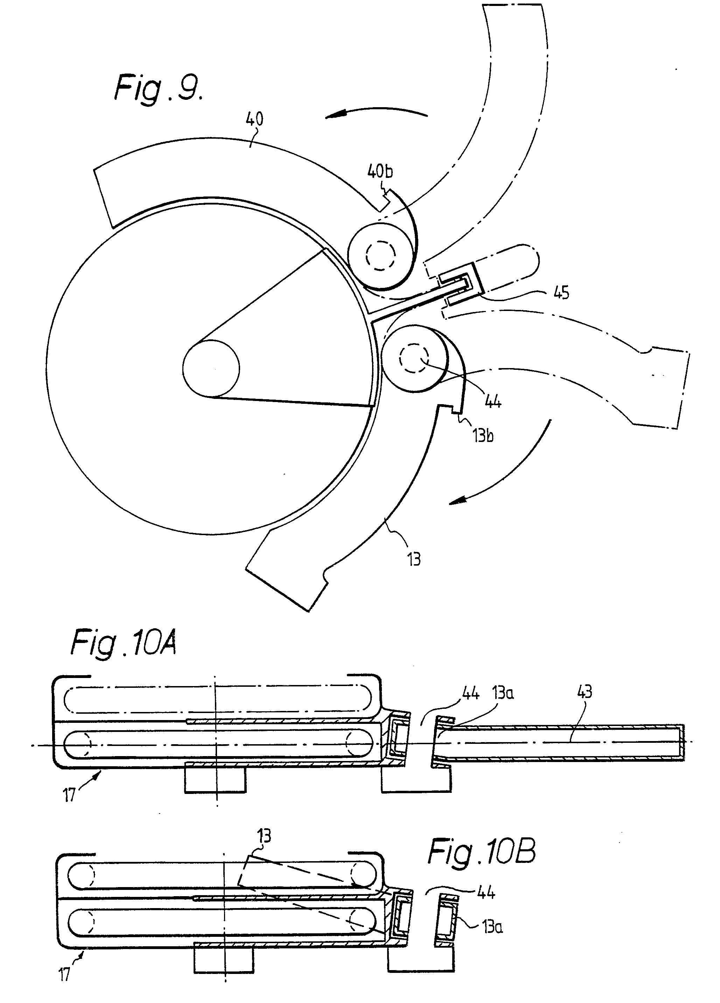

Figures 8 to 10B show a further embodiment of the invention in which the saddle 18' is supported by an arcuately shaped support 40 of the same general form as the frame member 13 and pivoted to the rear wheel assembly 17 at 41 about an axis parallel to that of the pedals (in a variant, the two axes may be coincident). The support 40 is releasably locked in the upright position by means of a handle operated clamp 45 and may be pivoted during folding up of the bicycle to a position in which it is concentric with the wheels (Figure 9).

In the embodiment of Figures 8 to 10B, the arrangement is such that pivoting of the frame member 13 to the folded position causes lateral shifting of the front wheel 2 out of the longitudinal median plane 43 of the bicycle so that in the folded position the wheels 2 and 3 can lie side-by-side. This is achieved by providing the frame member 13 with a rear portion 13a which extends obliquely to the plane 43, this rear portion 13a being pivoted to the rear assembly 17 by means of a pin 44 having its axis extending obliquely to the plane 43 and perpendicular to the rear portion 13a; the connecting member 22, etc, of Figure 1 are omitted and instead the front wheel is rotatable about axis 46 through a full 180° relative to the frame member 13. Alternatively the pin 44 could be parallel to the axis of the rear wheel 3 and the lateral offset achieved by providing it and the rear portion 13a of the frame member with complementary helical formations so that as relative pivoting of the frame member and rear assembly occurs the lateral offset of the wheel is achieved.

Instead of using helical formations, the frame member 13 may be slidable along the pin 44 between limited positions so as to achieve the lateral offset of the wheels during folding up; the frame member and rear assembly may be lockable in each of the two positions, folded and unfolded by any suitable means. A helical spring may be disposed around the pin 44 so as to urge the frame member 13 towards the unfolded position.

As shown in Figures 8 and 9, a clamping handle 45 is mounted on the rear assembly 17 and in the unfolded position of the bicycle is operatively engageable with formations 13b, 40b to lock the frame member 13 and support 40 in the riding positions.

It will be appreciated that the various

- 14 -

features of the above described embodiment and variants
may be used in other permutations so that a wide variety
of embodiments are possible. Numerous other modifications
will be apparent to those skilled in the art.

C L A I M S

1.    A folding bicycle having front and rear
wheels and a frame characterised in that the front
wheel is pivotable through 180° during folding of
the bicycle, and the bicycle is foldable about an
intermediate axis extending transversely with respect
to the frame so that the front and rear wheels lie
side-by-side.

2.    A bicycle according to claim 1
characterised in that the frame comprises a frame
member and a rear assembly which are pivoted relative
to one another about said intermediate axis.

3.    A bicycle according to claim 2 and
characterised by a connecting member and handle-bars
connected thereto, the connecting member being pivoted
to one end of the frame member, the other end of the
frame member being pivoted to the rear assembly,
wherein the front wheel is rotatable from the normal,
riding position to a position in which it is
substantially parallel to and adjacent said frame
member and the frame member is then pivotable so
that the front wheel is moved to be substantially
parallel to and adjacent the rear wheel.

4.    A bicycle according to claim 2
characterised in that a retaining member is provided
between the frame member and the connecting member such
that the connecting member may be stably retained in
one of only two positions relative to the frame member.

5.    A bicycle  according to claim 2
characterised in that the pivoting together of the
frame member and the rear assembly is such as to
allow or to cause the wheels to be laterally offset
during the folding up sequence whereby in the folded
condition they can lie side-by-side.

6.    A bicycle according to claim 2 and characterised by a seat and a support for the seat mounted on the rear assembly, the support being arcuate and pivoted to the rear assembly so that in the folded condition it will lie around part of the peripheries of the wheels.

7.    A bicycle according to claim 2 and characterised by a saddle and a pair of positioning strips for supporting the saddle, the positioning strips being disposed to either side of and slidably adjustably engaging with the rear assembly whereby the height of the saddle may be adjusted.

8.    A bicycle according to claim 2 characterised in that the frame member is arcuate and arranged to be concentric with and closely spaced from the periphery of the front wheel when the bicycle is in the folded position.

9.    A bicycle according to claim 2 characterised in that each wheel has a mudguard associated therewith, the internal width of each mudguard being greater than twice the width of a wheel, each wheel being mounted in its associated mudguard displaced from the symmetry plane within that mudguard such that upon folding, both wheels are within both mudguard.

10.    A bicycle according to claim 2 and characterised by a pedal spindle aligned with the pivoting axis of the frame member and rear assembly.

*Fig.1*

*Fig. 2*

Fig. 3

Fig.4

Fig.5

0012604

## Fig. 6

## Fig. 7

Fig.8

Fig.9.

Fig.10A

Fig.10B

European Patent
Office

**EUROPEAN SEARCH REPORT**

0012604

Application number

EP 79 30 2877

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | B 62 K 15/00 |
| | FR - A - 1 443 948 (JEUNET) <br><br> * Page 1, column 1, last paragraph; claim 1; figures 3,6 * <br><br> -- | 1,2,5 | |
| | FR - A - 1 482 367 (MANUFACTURE FRANCAISE D'ARMES ET CYCLES DE ST. ETIENNE) <br><br> * Page 1, column 1, lines 6-15; abstract point 2; figures 2,7 * <br><br> -- | 1,2,5 | |
| | GB - A - 1 089 211 (RALEIGH) <br><br> * Page 1, lines 19-25; 80-83; page 2, lines 1-4; figures 1,2 * <br><br> -- | 2,5 | **TECHNICAL FIELDS SEARCHED (Int.Cl. ³)** <br><br> B 62 K |
| | US - A - 3 015 498 (TANAKA & KATORI) <br><br> * Page 1, column 1, lines 36-52; claim 3; figures 3,8 * <br><br> -- | 1,3 | |
| | DE - A - 1 810 445 (SEARLE) <br><br> * Page 3, last 2 lines; page 4, first 6 lines and lines 15-19; page 8, first 3 lines; figure 1 * <br><br> -- | 2,10 | |
| A | FR - E - 28 155/ FR - A - 551 372 (SAUVAIN) <br><br> * Abstract; point 2; figure 1 * <br><br> -- <br><br> ./. | 1 | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

| | | | |
|---|---|---|---|
| The present search report has been drawn up for all claims | | | |
| Place of search <br> The Hague | Date of completion of the search <br> 06-03-1980 | Examiner <br> ZERI | |

EPO Form 1503.1  06.78

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | <u>FR - A - 2 243 104</u> (VAN TIJEN)<br>  * Page 4, lines 6-15, 37-38; claim 6; figure 1 *<br>---- | 1 | |
| | | | TECHNICAL FIELDS SEARCHED (Int. Cl. 3) |